# EUROPEAN PATENT SPECIFICATION

(11) **EP 2 163 047 B1**
(45) Date of publication and mention of the grant of the patent: **24.08.2011**
(21) Application number: 08755523.1
(22) Date of filing: 15.05.2008
(51) Int. Cl.: H04L 12/56

(54) **Routing protocol selection based upon motion-inferred link metric in mobile ad-hoc networks**
Routing-Protokollauswahl auf der Basis einer bewegungsdeduzierten Streckenmetrik in Mobil-Ad-Hoc-Netzen
Sélection d'un protocole de routage basé sur la mesure d'une liaison conditionnée au mouvement dans des réseaux mobiles ad hoc

(30) Priority: 22.05.2007 US 751683
(43) Date of publication of application: 17.03.2010
(73) Proprietor: Harris Corporation, Melbourne FL 32919 (US)
(72) Inventor: SONNENBERG, Jerome, Melbourne, Florida 32904 (US); CAIN, Joseph Bibb, Indialantic, Florida 32903 (US)
(74) Representative: Schmidt, Steffen
(86) International application number: PCT/US2008/063687
(87) International publication number: WO 2008/147706

(56) References cited:
- WO-A-2007/015089
- MNAOUER A B ET AL: "A new polymorphic multicast routing protocol for MANET" COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 1, 16 May 2005 (2005-05-16), pages 233-238, XP010827514 ISBN: 978-0-7803-8938-0
- CHI-HSIANG YEH ED - INSTITUTE OF ELECTRICAL AND ELECTRONICS ENGINEERS: "DEAR: an extension of traffic engineering for routing and resource management in ad hoc wireless networks" VTC SPRING 2002. IEEE 55TH. VEHICULAR TECHNOLOGY CONFERENCE. PROCEEDINGS. BIRMINGHAM, AL, MAY 6 - 9, 2002; [IEEE VEHICULAR TECHNOLGY CONFERENCE], NEW YORK, NY : IEEE, US, vol. 4, 6 May 2002 (2002-05-06), pages 1603-1607, XP010622085 ISBN: 978-0-7803-7484-3
- GOFF T ET AL: "PREEMPTIVE ROUTING IN AD HOC NETWORKS" PROCEEDINGS OF THE 7TH. ANNUAL INTERNATIONAL CONFERENCE ON MOBILE COMPUTING AND NETWORKING. MOBICOM 2001. ROME, ITALY, JULY 16 - 21, 2001; [ANNUAL INTERNATIONAL CONFERENCE ON MOBILE COMPUTING AND NETWORKING], NEW YORK, NY : ACM, US, vol. CONF. 7, 16 July 2001 (2001-07-16), pages 43-52, XP001071991 ISBN: 978-1-58113-422-3
- NILSSON A ET AL: "Routing in hybrid ad hoc networks using service points" VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 3, 6 October 2003 (2003-10-06), pages 2078-2082, XP010701575 ISBN: 978-0-7803-7954-1
- MARCELO DIAS DE AMORIM ET AL: "Dissecting the routing architecture of self-organizing networks" IEEE WIRELESS COMMUNICATIONS, IEEE SERVICE CENTER, PISCATAWAY, NJ, US, vol. 13, no. 6, 1 December 2006 (2006-12-01), pages 98-104, XP011154459 ISSN: 1536-1284

## Description

The present invention relates to the field of communication networks, and, more particularly, to mobile ad hoc wireless networks and related methods.

Wireless networks have experienced increased development in the past decade. One of the most rapidly developing areas is mobile ad hoc networks. Physically, a mobile ad hoc network includes a number of geographically distributed, potentially mobile nodes wirelessly connected by one or more radio frequency channels. Compared with other type of networks, such as cellular networks or satellite networks, the most distinctive feature of mobile ad hoc networks is the lack of any fixed infrastructure. The network is formed of mobile nodes only, and a network is created on the fly as the nodes transmit to or receive from other nodes. The network does not in general depend on a particular node and dynamically adjusts as some nodes join or others leave the network.

In an environment where a fixed communication infrastructure is unreliable or unavailable, such as in a natural disaster area struck by earthquake or hurricane, an ad hoc network can be quickly deployed and provide much needed communications. Ad hoc networks may allow people to exchange data in the field or in a classroom without using any network structure except the one they create by simply turning on their computers or PDAs.

As wireless communication increasingly permeates everyday life, new applications for mobile ad hoc networks will continue to emerge and become an important part of the communication structure. Mobile ad hoc networks may pose serious challenges to the designers. Due to the lack of a fixed infrastructure, nodes self-organize and reconfigure as they move, join or leave the network. All nodes could potentially be functionally identical and there may not be any natural hierarchy or central controller in the network. Many network-controlling functions are typically distributed among the nodes. Nodes are often powered by batteries and have limited communication and computation capabilities. The bandwidth of the system is usually limited. The distance between two nodes often exceeds the radio transmission range, and a transmission has to be relayed by other nodes before reaching its destination. Consequently, a MANET typically has a multi-hop topology, and this topology changes as the nodes move around.

The Mobile Ad-Hoc Networks (MANET) working group of the Internet Engineering Task Force (IETF) has been actively evaluating and standardizing routing, including multicasting, protocols. Because the network topology changes arbitrarily as the nodes move, information is subject to becoming obsolete, and different nodes often have different views of the network, both in time (information may be outdated at some nodes but current at others) and in space (a node may only know the network topology in its neighborhood usually not far away from itself).

A routing protocol desirably adapts to frequent topology changes and with less accurate information. Because of these unique requirements, routing in these networks is very different from others. Gathering fresh information about the entire network is often costly and impractical. Many routing protocols are reactive (on-demand) protocols: they collect routing information only when necessary and to destinations they need routes to, and do not generally maintain unused routes after some period of time. Accordingly, the routing overhead is greatly reduced compared to pro-active protocols which maintain routes to all destinations at all times. It may be important for a protocol to be adaptive. Ad Hoc on Demand Distance Vector (AODV), Dynamic Source Routing (DSR) and Temporally Ordered Routing Algorithm (TORA) are representative of on-demand routing protocols presented at the MANET working group.

Examples of other various routing protocols include Destination-Sequenced Distance Vector (DSDV) routing which is disclosed in U.S. Pat. No. 5,412,654 to Perkins, and Zone Routing Protocol (ZRP) which is disclosed in U.S. Pat. No. 6,304,556 to Haas. ZRP is a hybrid protocol using both proactive and reactive approaches based upon distance from a source node. The Temporal Transition Network Protocol (TTNP), discussed in U.S. Patent No. 6,754,192 assigned to the present assignee Harris Corp. of Melbourne, Florida, is another hybrid protocol that includes building and updating route tables at each node by managing and controlling the application of either proactive or reactive route discovery and their respective associated processes to define and maintain routes in the network based upon predicted route stability.

These conventional routing protocols typically use a best effort approach in selecting a route from the source node to the destination node. Typically, the number of hops is the main criteria (metric) in such a best effort approach. In other words, the route with the least amount of hops is selected as the transmission route.

MANETs are aggregations of mobile IP-based routing nodes that may exhibit different throughput, convergence and Quality of Service (QoS) characteristics depending upon the dynamic nature of the RF environment among the various nodes. This may be influenced by node motion and range dynamics (foliage, fading, multipath interference, etc.). Some routing protocols may work better in mobile-fixed (at the halt) environments and some may work better for various ranges of motion (i.e., various ranges of RF dynamics). The routing protocol a node should use at any given time can be determined based on derived motion information from a Global Positioning System (GPS) or Attitude and Heading Reference System (AHRS), for example.

Traditional MANETS may utilize high-cost, low density configurations of nodes. In other words, the incremental cost for GPS or AHRS capability is relatively small for each node and small relative to the total system cost. Newer architectures for MANETs may call for low-cost, low-power, high-density configurations in which the additional cost of GPS or AHRS components may be prohibitive.

MANETs typically use a fixed routing protocol (EIGRP, OSPF, AODV, OLSR, etc). Even on systems with motion knowledge, dynamic selection of routing protocols is not done. The trade-off is to pick a routing protocol that is the best choice for the range of deployments envisioned.

The Defense Advanced Research Projects Agency's (DARPA) Wireless Network after Next (WNaN) Adaptive Network Development (WAND) initiative is attempting to integrate a number of leading-edge technologies (MIMO, XG, power management, etc.) onto a very low-cost (e.g. disposable in tactical environments) platform and create high-capacity data paths among the various nodes. Optimal packet routing on top of this hardware may be needed for the WAND tenets and for adoption of this emerging technology into deployable systems.

Current commercial MANETs compete with fixed-infrastructure cellular networks for subscribers. MANET subscriber nodes may be too expensive if they require a GPS receiver. Accordingly, there may be a need for MANET nodes that include the capability for dynamic routing protocol selection without the cost of motion sensing or calculating hardware such as GPS and AHRS hardware. WO 2007/015089 is about monitoring a network to measure parameters relating to network context. The parameters are used to determine a most appropriate routing protocol.

In view of the foregoing background, it is therefore an object of the present invention to provide dynamic routing protocol selection capability within a MANET without the cost of geoposition and/or motion sensing or calculating hardware.

This and other objects, features, and advantages in accordance with the present invention are provided by a method for managing and controlling the discovery and maintenance of routes in a MANET comprising a plurality of wireless mobile nodes. The method may include: determining, at at least one wireless mobile node, additions and drop outs over time of neighboring nodes in communication with the at least one wireless mobile node; generating a motion-inferred link metric based upon the additions and drop outs over time; selecting a routing protocol from a plurality of possible routing protocols based upon the motion-inferred link metric; and discovering routes, with the selected routing protocol, from the at least one wireless mobile node to other wireless mobile nodes within the network. Accordingly, the cost of geoposition and or motion sensing may be avoided, such as desired for low-power, high-density MANETs.

The MANET may operate in accordance with a multilayer protocol hierarchy including a network layer and a data link layer at each wireless mobile node. Determining additions and drop outs over time of neighboring nodes (e.g. within one hop) in communication with the wireless mobile node may be performed at the data link layer. Generating the motion-inferred link metric and selecting the routing protocol may be performed at the network layer. Also, selecting the routing protocol from the plurality of possible routing protocols may comprise selecting the routing protocol independent of any geoposition data.

Furthermore, selecting the routing protocol may comprise selecting the routing protocol also based upon at least one of overhead, throughput, and convergence time of the plurality of possible routing protocols. The method may include calculating an overhead cost for each of the plurality of possible routing protocols based upon the motion-inferred link metric. In addition, electing the routing protocol from the plurality of possible routing protocols may comprise selecting the routing protocol based upon the calculated overhead cost.

The plurality of possible routing protocols may include, for example, at least one of Open Shortest Path First (OSPF) protocol, OSPF protocol with MANET extensions, Interior Gateway Routing Protocol (IGRP), Enhanced Interior Gateway Routing Protocol (EIGRP), Routing Information Protocol (RIP), Optimized Link State Routing (OLSR) protocol, Overlapping Relays (OR) protocol, and MANET Designated Routers (MDR) protocol. Also, determining additions and drop outs at the at least one wireless mobile node may comprise determining additions and drop outs for the plurality of wireless mobile nodes. The routing protocol may be selected for the mobile ad hoc network, i.e., network or cluster wide routing protocol selection.

Another aspect is directed to a MANET including a plurality of wireless mobile nodes. Each wireless mobile node may comprise a controller and a wireless communications device cooperating therewith to determine additions and drop outs over time of neighboring nodes in communication therewith; generate a motion-inferred link metric based upon the additions and drop outs over time; select a routing protocol from a plurality of possible routing protocols based upon the motion-inferred link metric; and discover routes, with the selected routing protocol, to other wireless mobile nodes within the network.

Another aspect is directed to a wireless node for operation with a plurality of wireless mobile nodes within a mobile ad-hoc network (MANET), the wireless node including a controller and a wireless communications device cooperating therewith to determine additions and drop outs over time of neighboring nodes in communication therewith, generate a motion-inferred link metric based upon the additions and drop outs over time, select a routing protocol from a plurality of possible routing protocols based upon the motion-inferred link metric, and discover routes, with the selected routing protocol, to other wireless mobile nodes within the network.

The motion-inferred link metric, e.g., rate of change of RF neighbors in a node, may be an indicator that can be used to advantageously select the routing protocol, e.g., at the network layer, without the cost of motion sensing/calculation hardware such as GPS capabilities. The present approach may advantageously include cross-layer interaction between the link/MAC layer and routing/network layer to dynamically influence the selection of the routing protocol, and this may further reduce the cost of nodes in such infrastructure-less networks.
FIG. 1 is a schematic diagram illustrating a snapshot of a MANET and details of a mobile node operating in accordance with features of the present invention.
FIG. 2 is flowchart illustrating various steps in a method in accordance with the present invention.

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

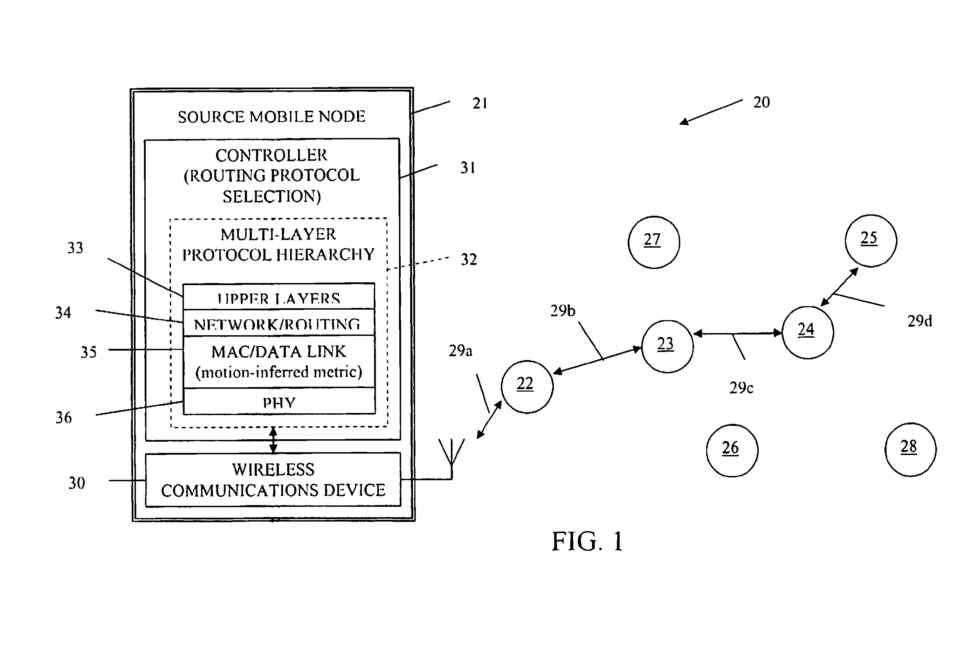

Referring initially to FIG. 1, a snapshot of a MANET **20** in accordance with the present invention will now be described. The MANET **20** illustratively includes a plurality of mobile nodes **21-28.** In the illustrated example, the mobile node **21** functions as a source node, while the mobile node **25** functions as a destination node with which the source node seeks to communicate. The nodes **21-28** may be any suitable type of mobile device capable of communicating within a MANET such as computers, personal data assistants (PDAs), etc., including a wireless communications device **30,** for example, and other devices which will be appreciated by those of skill in the art. Of course, it will also be appreciated that certain of the nodes **21-28** may optionally be connected to a fixed communication infrastructure in some applications, if desired.

Information describing the node includes a node ID (IP address, ATM address, MAC address, etc.) Examples of MANETs are set forth in commonly assigned U.S. Pat. Nos. 6,763,013 and 6,754,192; and U.S. Pat. Publication Nos. 2005/0053003 and 2004/0203820.

The source mobile node **21** further illustratively includes a controller **31,** the operation of which will be described below. By way of example, the controller **31** may be implemented using microprocessors, memory, software, etc., as will be appreciated by those of skill in the art. Furthermore, the wireless communications device **30** may include wireless modems, wireless local area network (LAN) devices, cellular telephone devices, etc., as well as an associated antenna(s), as illustratively shown. By way of example, one or more phased array antennas (as well as other suitable antennas) may be used, as will be appreciated by those skilled in the art. It will further be understood that the mobile nodes **23-28** also preferably include suitable wireless communications devices/controllers as well, which are not shown in FIG. 1 for clarity of illustration.

One function that the controller **31** performs is to establish one or more routes between the source mobile node **21** and the destination mobile node **25** for transferring data therebetween. A single route is illustratively shown in the exemplary embodiment that passes through intermediate mobile nodes **22-24** and includes wireless communications links **29a-29d.** It should be noted that while only a single route is shown for clarity of illustration, any number of routes may be used.

As will be appreciated by those skilled in the art, MANET routes may include any number of intermediate nodes therein depending upon network size and proximity between the nodes, for example. Each intermediate node along a route is typically referred to as a "hop," thus routes passing through multiple intermediate nodes are sometimes referred to as "multi-hop" routes. It should be noted that while a relatively few number of intermediate nodes **22-24** are shown in the present example for clarity of illustration, the MANET **20** may include any number of nodes therein. Furthermore, it will be appreciated that portions of the route to the destination mobile node **25** could also include wired or fixed infrastructure.

It will also be appreciated that the way in which the controller **31** establishes routes will depend upon the particular MANET routing protocol being implemented in the MANET **20.** As noted above, this may be done using proactive protocols that keep routing information continuously up to date, reactive protocols which discover routes on-demand when there is a need to send data to the destination node **22,** or by a combination thereof. Any suitable MANET protocols may be used to establish routes, such as those previously discussed above, for example.

Data communications within MANETS typically follow the open system interconnection (OSI) architecture (or some variation thereof), as do other wireless networks (e.g., wireless LANs). By way of background, the OSI is a network protocol hierarchy which includes seven different control layers, namely (from highest to lowest) the application layer, presentation layer, session layer, transport layer, network layer, data link layer, and physical layer.

Generally, in the OSI model control is passed from one layer to the next at an originating node or terminal starting at the application layer and proceeding to the physical layer. The data is then sent across the network, and when it reaches the destination terminal/node, it is processed in reverse order back up the hierarchy (i.e., from the physical layer to the application layer). Furthermore, data corresponding to each particular layer is typically organized in protocol data units (PDUs) referred to as packets at the network level.

The controller **31** similarly operates in accordance with a multi-layer protocol hierarchy **32** to provide an integrated framework for operations. Generally, the multi-layer protocol hierarchy **32** may include a plurality of upper protocol layers **33** (e.g. application layer, presentation layer, session layer, transport layer), and a plurality of relatively lower protocol layers including a network or routing layer **34,** a MAC or data link layer **35,** and a physical or PHY layer **36.**

The controller **31** and wireless communications device **30** may cooperate to determine additions and drop outs over time of neighboring nodes **22-28** in communication therewith, generate a motion-inferred link metric based upon the additions and drop outs over time, select a routing protocol from a plurality of possible routing protocols based upon the motion-inferred link metric, and discover routes, with the selected routing protocol, to other wireless mobile nodes **22-28** within the network **20.**

In addition to the various routing protocols discussed above, the possible routing protocols may include, but are not limited to, for example, Open Shortest Path First (OSPF) protocol, OSPF protocol with MANET extensions, Interior Gateway Routing Protocol (IGRP), Enhanced Interior Gateway Routing Protocol (EIGRP), Routing Information Protocol (RIP), Optimized Link State Routing (OLSR) protocol, Overlapping Relays (OR) protocol, and MANET Designated Routers (MDR) protocol.

The motion-inferred link metric may be, for example, the rate of change of neighbors **22-28** in communication range of the wireless node **21.** Preferably, the controller 31 and wireless communications device **30** cooperate at the data link layer **35** to determine the additions and drop outs of neighboring nodes **22-28,** and cooperate at the network layer **34** to generate the motion-inferred link metric and select the routing protocol.

As discussed above, the controller **31** and wireless communications device 30 may cooperate to select the routing protocol from the plurality of possible routing protocols independent of any position data, e.g., such as motion and/or position data generated by a local GPS capability. Indeed, to reduce cost in the mobile node **21,** the need for motion or position sensing hardware may be avoided.

The controller **31** and wireless communications device **30** may cooperate to select the routing protocol from the plurality of possible routing protocols also based upon overhead, throughput, and/or convergence time of the plurality of possible routing protocols. The controller **31** and wireless communications device **30** may cooperate to calculate an overhead cost for each of the plurality of possible routing protocols based upon the motion-inferred link metric, and may cooperate to select the routing protocol from the plurality of possible routing protocols based upon the calculated overhead cost.

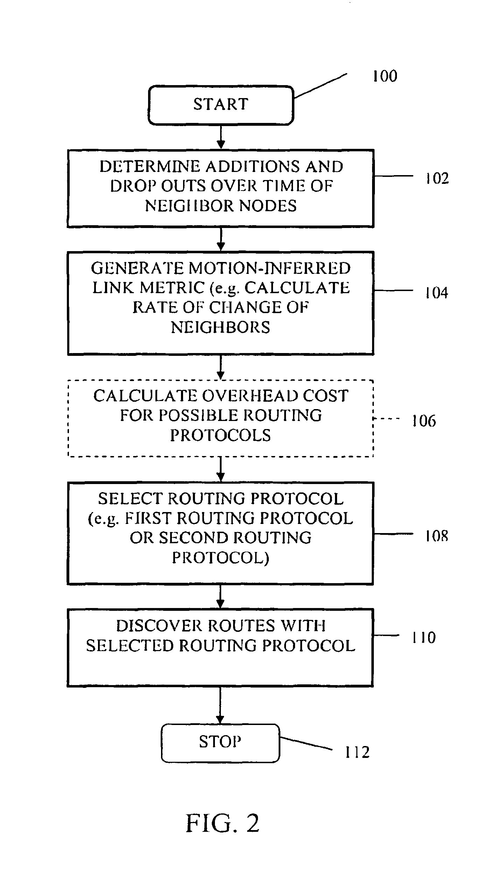

A method aspect in accordance with the present approach will now be described with additional reference to the flowchart of FIG. 2. The method is for managing and controlling the discovery and maintenance of routes in a mobile ad hoc network **20** comprising a plurality of wireless mobile nodes **21-28.** The method begins (block **100)** and may include determining, at at least one wireless mobile node **21** or network wide, additions and drop outs over time of neighboring nodes **22-28** in communication with the at least one wireless mobile node **21** (block **102),** and at block **104** generating a motion-inferred link metric (such as the rate of change of neighbors) based upon the additions and drop outs over time. At block **108,** a routing protocol is selected from a plurality of possible routing protocols (e.g. a first or second routing protocol) based upon the motion-inferred link metric, and, at block **110,** routes are discovered with the selected routing protocol from the wireless mobile node **21** to other wireless mobile nodes **22-28** within the network **20.**

As discussed above, the network **20** preferably operates in accordance with a multilayer protocol hierarchy **32** including at least a network layer **34** and a data link layer **35** at the wireless mobile node **21.** As such, determining additions and drop outs over time of neighboring nodes (e.g. within one hop) in communication with the wireless mobile node may be performed at the data link layer **35,** and generating the motion-inferred link metric and selecting the routing protocol are performed at the network layer **34.** Also, selecting the routing protocol from the plurality of possible routing protocols may comprise selecting the routing protocol independent of any position data.

Furthermore, selecting the routing protocol from the plurality of possible routing protocols may comprise selecting the routing protocol also based upon overhead, throughput, and/or convergence time of the plurality of possible routing protocols. The method may include calculating an overhead cost for each of the plurality of possible routing protocols based upon the motion-inferred link metric, wherein selecting the routing protocol from the plurality of possible routing protocols comprises selecting the routing protocol based upon the calculated overhead cost.

The methods, systems and/or devices of the present invention may, for example, be used in connection with Highband Networking Waveform (HNW) system developed by Harris Corporation of Melbourne, Florida which was created to provide high bandwidth, long range line-of-site connectivity between users of widely dispersed Local Area Networks (LAN). The HNW is an ad hoc (i.e., self-forming, self-healing) implementation of an IP-based wideband wireless network protocol using Directive Network Technology (DNT). DNT uses directive beam antennas to extend range and improve throughput. Directive antennas also provide inherent low probability of intercept and low probability of detection (LPI/LPD) capability.

HNW characteristics include ease of use, high throughput, long range on-the-move (OTM) and at-the-halt (ATH), secure, High Assurance Internet Protocol Encryptor (HAIPE) ready with Advanced Encryption Standard (AES) Transmission Security (TRANSEC) covers, standard network applications, seamless sensor support, interoperable with existing IPv4 networks, and also adheres to IPv6 open standards interface.

The HNW can be considered a wireless Wide Area Networking (WAN) waveform that connects LANs and their users together. This waveform, which operates with equal effectiveness ATH or OTM, provides seamless, self-forming connectivity between all users. Although the waveform has primary applicability to the wide area scenario, it can be used to provide high data rate user access in localized areas where operational command centers are numerous and data concentration is high.

HNW is a Software Communications Architecture (SCA) compliant waveform. From an architecture perspective, the HNW is formed at layers 1 and 2 in the OSI stack. Layer 2, which may also be referred to as a link layer, for HNW is called the U-MAC (Universal Media Access Control) because it has been designed to universally link various routing (layer 3) and physical (layer 1) layers together. HNW interfaces with open architecture layer 3 routing protocols such as OLSR and OSPF with MANET extensions. HNW has two physical layers available including ASIC based OFDM modem and the SCA compliant VHDL based single carrier modem.

HNW uses a MAC layer protocol to detect all of the RF neighbors in range and select a subset of these neighbors as link partners. The set of links presented to the router by the HNW changes as a function of the dynamics of the intervening RF environment including source node motion, destination node motion, and/or RF environment (blockage, fade, etc)

In accordance with the features of the MANET embodiments described herein the rate of change of RF neighbors in a node, e.g., utilizing the HNW MAC neighbor discovery algorithms, may be an indicator that can be used to advantageously select the routing protocol at the network layer, without the cost of motion sensing/calculation hardware such as GPS capabilities. Current HNW modeling shows that the dynamic link metrics can be used to help the routing layer calculate link cost and then determine a best route. The approach described herein extends the cross-layer interaction between the link/MAC layer and routing/network layer to dynamically influence the selection of the routing protocol.

The approach described herein may be implemented within a network model that incorporates HNW nodes with several variations of MANET routing protocols. Each routing protocol may be individually tested against neighbor change rates, and the results correlated.

The approach described herein may be implemented using software to infer motion and/or RF environment change and preferably includes the cross-layer scheme to have the link layer neighbor change-rate information drive the selection of the routing protocol. Conventional routing protocol selection is typically not dynamic, but based on *α priori* systems analysis. Coordinating network-wide dynamic routing protocol selection is non-trivial, but similar to other network-wide coordination tasks such as frequency selection.

For any given application, there may not be a single "best" routing protocol, however, the present approach may determine the most advantageous (lowest overhead, fastest throughput, fastest convergence) protocol within a set of constraints. The constraint that has been discounted in many conventional approaches is motion, for example, because it is expensive to calculate as discussed above. The present approach has applicability to various MANETs, e.g., governmental and/or commercial MANETs, to reduce the cost of MANET nodes in such infrastructure-less networks.

## Claims

1. A method for managing and controlling the discovery and maintenance of routes in a mobile ad hoc network MANET comprising a plurality of wireless mobile nodes, the method comprising:
determining, at at least one wireless mobile node, additions and drop outs over time of neighboring nodes in communication with the at least one wireless mobile node;
generating a motion-inferred link metric based upon the additions and drop outs over time;
selecting a routing protocol from a plurality of possible routing protocols based upon the motion-inferred link metric; and
discovering routes, with the selected routing protocol, from the at least one wireless mobile node to other wireless mobile nodes within the MANET.

2. The method according to Claim 1 wherein the MANET operates in accordance with a multilayer protocol hierarchy including a network layer and a data link layer at each wireless mobile node; wherein determining additions and drop outs over time of neighboring nodes in communication with the at least one wireless mobile node is performed at the data link layer; and wherein generating the motion-inferred link metric and selecting the routing protocol are performed at the network layer.

3. The method according to Claim 1 wherein selecting the routing protocol from the plurality of possible routing protocols comprises selecting the routing protocol independent of any position data.

4. The method according to Claim 1 wherein selecting the routing protocol from the plurality of possible routing protocols comprises selecting the routing protocol also based upon at least one of overhead, throughput, and convergence time of the plurality of possible routing protocols.

5. The method according to Claim 1 further comprising calculating an overhead cost for each of the plurality of possible routing protocols based upon the motion-inferred link metric; and wherein selecting the routing protocol from the plurality of possible routing protocols comprises selecting the routing protocol based upon the calculated overhead cost.

6. A wireless node for operation with a plurality of wireless mobile nodes within a mobile ad-hoc network MANET, the wireless node comprising:
a controller and a wireless communications device cooperating therewith to
determine additions and drop outs over time of neighboring nodes in communication therewith,
generate a motion-inferred link metric based upon the additions and drop outs over time,
select a routing protocol from a plurality of possible routing protocols based upon the motion-inferred link metric, and
discover routes, with the selected routing protocol, to other wireless mobile nodes within the network.

7. The wireless node according to Claim 6, wherein the MANET operates in accordance with a multilayer protocol hierarchy including a network layer and a data link layer at each wireless mobile node; and wherein the controller and wireless communications device cooperate at the data link layer to determine the additions and drop outs of neighboring nodes, and cooperate at the network layer to generate the motion-inferred link metric and select the routing protocol.

8. The wireless node according to Claim 6, wherein the controller and wireless communications device cooperate to select the routing protocol from the plurality of possible routing protocols independent of any geoposition data.

9. The wireless node according to Claim 6, wherein the controller and wireless communications device cooperate to select the routing protocol from the plurality of possible routing protocols also based upon at least one of overhead, throughput, and convergence time of the plurality of possible routing protocols.

10. The wireless node according to Claim 6, wherein the controller and wireless communications device cooperate to calculate an overhead cost for each of the plurality of possible routing protocols based upon the motion-inferred link metric, and cooperate to select the routing protocol from the plurality of possible routing protocols based upon the calculated overhead cost.

## Patentansprüche

1. Verfahren zum Handhaben und Steuern der Ermittlung und Aufrechterhaltung von Pfaden in einem mobilen Ad-hoc-Netzwerk MANET, umfassend eine Vielzahl von drahtlosen mobilen Knoten, wobei das Verfahren umfasst:
Bestimmen, in wenigstens einem drahtlosen mobilen Knoten, Zugänge und Ausfälle von benachbarten Knoten über die Zeit, die in Verbindung mit dem wenigstens einen drahtlosen mobilen Knoten stehen;
Erzeugen einer bewegungsdeduzierten Verbindungsmetrik basierend auf den Zugängen und Ausfällen über die Zeit;
Auswählen eines Routing-Protokolls aus einer Vielzahl von möglichen Routing-Protokollen basierend auf der bewegungsdeduzierten Verbindungsmetrik; und
Ermitteln von Pfaden, mit dem ausgewählten Routing-Protokoll, von dem wenigstens einen drahtlosen mobilen Knoten zu anderen drahtlosen mobilen Knoten innerhalb des MANETs.

2. Verfahren nach Anspruch 1, wobei das MANET gemäß einer vielschichtigen Protokoll-Hierarchie, umfassend eine Netzwerkschicht und eine Datenverbindungsschicht in jedem drahtlosen mobilen Knoten, arbeitet; wobei das Bestimmen von Zugängen und Ausfällen von benachbarten Knoten, die in Verbindung mit dem wenigstens einen drahtlosen mobilen Knoten stehen, über die Zeit in der Datenverbindungsschicht durchgeführt wird; und wobei das Erzeugen der bewegungsdeduzierten Verbindungsmetrik und das Auswählen des Routing-Protokolls in der Netzwerkschicht durchgeführt werden.

3. Verfahren nach Anspruch 1, wobei das Auswählen des Routing-Protokolls aus der Vielzahl von möglichen Routing-Protokollen ein Auswählen des Routing-Protokolls unabhängig von jeglichen Positionsdaten umfasst.

4. Verfahren nach Anspruch 1, wobei das Auswählen des Routing-Protokolls aus der Vielzahl von möglichen Routing-Protokollen ein Auswählen des Routing-Protokolls umfasst, das auch auf einem Overhead, und/oder einem Datendurchsatz und/oder einer Konvergenzzeit der Vielzahl von möglichen Routing-Protokollen basiert.

5. Verfahren nach Anspruch 1, weiter umfassend Berechnen eines Overhead-Aufwands für jedes der Vielzahl von möglichen Routing-Protokollen basierend auf der bewegungsdeduzierten Verbindungsmetrik; und wobei das Auswählen des Routing-Protokolls aus der Vielzahl von möglichen Routing-Protokollen ein Auswählen des Routing-Protokolls basierend auf dem berechneten Overhead-Aufwand umfasst.

6. Drahtloser Knoten zum Arbeiten mit einer Vielzahl von drahtlosen mobilen Knoten innerhalb eines mobilen Ad-hoc Netzwerks MANET, wobei der drahtlose Knoten umfasst:
eine Steuerung und eine damit zusammenwirkende drahtlose Kommunikationseinrichtung, um
Zugänge und Ausfälle von benachbarten, damit in Verbindung stehender Knoten über der Zeit zu bestimmen,
eine bewegungsdeduzierte Verbindungsmetrik basierend auf den Zugängen und Ausfällen über der Zeit zu erzeugen,
ein Routing-Protokoll aus einer Vielzahl von möglichen Routing-Protokollen basierend auf der bewegungsdeduzierten Verbindungsmetrik auszuwählen, und
Pfade zu anderen drahtlosen mobilen Knoten innerhalb des Netzwerks mit dem ausgewählten Routing-Protokoll zu ermitteln.

7. Drahtloser Knoten nach Anspruch 6, wobei das MANET gemäß einer vielschichtigen Protokollhierarchie, umfassend eine Netzwerkschicht und eine Datenverbindungsschicht in jedem drahtlosen mobilen Knoten, arbeitet; und wobei die Steuerung und die drahtlose Kommunikationseinrichtung in der Datenverbindungsschicht zusammenwirken, um die Zugänge und Ausfälle von benachbarten Knoten zu bestimmen, und in der Netzwerkschicht zusammenwirken, um die bewegungsdeduzierte Verbindungsmetrik zu erzeugen und das Routing-Protokoll auszuwählen.

8. Drahtloser Knoten nach Anspruch 6, wobei die Steuerung und die drahtlose Kommunikationseinrichtung zusammenwirken, um das Routing-Protokoll aus der Vielzahl von möglichen Routing-Protokollen unabhängig von jeglichen Geopositionsdaten auszuwählen.

9. Drahtloser Knoten nach Anspruch 6, wobei die Steuerung und die drahtlose Kommunikationseinrichtung zusammenwirken, um das Routing-Protokoll aus der Vielzahl von möglichen Routing-Protokollen auszuwählen, das auch auf dem Overhead, und/oder dem Datendurchsatz und/oder der Konvergenzzeit der Vielzahl von möglichen Routing-Protokollen basiert.

10. Drahtloser Knoten nach Anspruch 6, wobei die Steuerung und die drahtlose Kommunikationseinrichtung zusammenwirken, um einen Overhead-Aufwand für jedes der Vielzahl von möglichen Routing-Protokollen zu berechnen, basierend auf der bewegungsdeduzierten Verbindungsmetrik, und zusammenwirken, um das Routing-Protokoll aus der Vielzahl von möglichen Routing-Protokollen basierend auf dem berechneten Overhead-Aufwand auszuwählen.

## Revendications

1. Procédé pour gérer et commander la découverte et le maintien de trajets dans un réseau mobile ad hoc MANET comprenant une pluralité de noeuds mobiles sans fil, le procédé comprenant les étapes consistant à :
déterminer, au niveau au moins d'un noeud mobile sans fil, des ajouts et des décrochages au fil du temps de noeuds voisins en communication avec ledit au moins un noeud mobile sans fil ;
engendrer une mesure de liaison déduite du mouvement sur la base des ajouts et des décrochages au fil du temps ;
sélectionner un protocole de routage à partir d'une pluralité de protocoles de routage possibles sur la base de la mesure de liaison déduite du mouvement ; et
découvrir des trajets, avec le protocole de routage sélectionné, à partir dudit au moins un noeud mobile sans fil vers d'autres noeuds mobiles sans fil à l'intérieur du MANET.

2. Procédé selon la revendication 1, dans lequel le MANET fonctionne en conformité avec une hiérarchie de protocole multicouche comprenant une couche réseau et une couche liaison de données au niveau de chaque noeud mobile sans fil; dans lequel la détermination d'ajouts et de décrochages au fil du temps de noeuds voisins en communication avec ledit au moins un noeud mobile sans fil est réalisée au niveau de la couche liaison de données ; et dans lequel la génération de la mesure de liaison déduite du mouvement et la sélection du protocole de routage sont réalisées au niveau de la couche réseau.

3. Procédé selon la revendication 1, dans lequel la sélection du protocole de routage à partir de la pluralité de protocoles de routage possibles comprend la sélection du protocole de routage indépendamment de données de position quelconques.

4. Procédé selon la revendication 1, dans lequel la sélection du protocole de routage à partir de la pluralité de protocoles de routage possibles comprend la sélection du protocole de routage également sur la base d'au moins un parmi le surdébit, le débit et le temps de convergence de la pluralité de protocoles de routage possibles.

5. Procédé selon la revendication 1, comprenant en outre le calcul d'un coût en surdébit pour chaque protocole de la pluralité de protocoles de routage possibles sur la base de la mesure de liaison déduite du mouvement ; et dans lequel la sélection du protocole de routage à partir de la pluralité de protocoles de routage possibles comprend la sélection du protocole de routage sur la base du coût en surdébit calculé.

6. Noeud sans fil destiné à un fonctionnement avec une pluralité de noeuds mobiles sans fil à l'intérieur d'un réseau mobile ad hoc MANET, le noeud sans fil comprenant :
un contrôleur et un dispositif de communication sans fil coopérant avec celui-ci pour
déterminer des ajouts et des décrochages au fil du temps de noeuds sans fil voisins en communication avec celui-ci,
engendrer une mesure de liaison déduite du mouvement sur la base des ajouts et des décrochages au fil du temps,
sélectionner un protocole de routage à partir d'une pluralité de protocoles de routage possibles sur la base de la mesure de liaison déduite du mouvement, et
découvrir des trajets, avec le protocole de routage sélectionné, vers d'autres noeuds mobiles sans fil à l'intérieur du réseau.

7. Noeud sans fil selon la revendication 6, dans lequel le MANET fonctionne en conformité avec une hiérarchie de protocole multicouche comprenant une couche réseau et une couche liaison de données au niveau de chaque noeud mobile sans fil ; et dans lequel le contrôleur et le dispositif de communication sans fil coopèrent au niveau de la couche liaison sans fil pour déterminer les ajouts et décrochages de noeuds voisins, et coopèrent au niveau de la couche réseau pour engendrer la mesure de liaison déduite du mouvement et sélectionner le protocole de routage.

8. Noeud sans fil selon la revendication 6, dans lequel le contrôleur et le dispositif de communication sans fil coopèrent pour sélectionner le protocole de routage à partir de la pluralité de protocoles de routage possibles indépendamment de données de géolocalisation quelconques.

9. Noeud sans fil selon la revendication 6, dans lequel le contrôleur et le dispositif de communication sans fil coopèrent pour sélectionner le protocole de routage à partir de la pluralité de protocoles de routage possibles également sur la base d'au moins un parmi le surdébit, le débit et le temps convergence de la pluralité de protocoles de routage possibles.

10. Noeud sans fil selon la revendication 6, dans lequel le contrôleur et le dispositif de communication sans fil coopèrent pour calculer un coût en surdébit pour chaque protocole de la pluralité de protocoles de routage possibles sur la base de la mesure de liaison déduite du mouvement, et coopèrent pour sélectionner le protocole de routage à partir de la pluralité de protocoles de routage possibles sur la base du coût en surdébit calculé.
